# EUROPÄISCHE PATENTSCHRIFT

(11) **EP 1 316 746 B1**
(45) Veröffentlichungstag und Bekanntmachung des Hinweises auf die Patenterteilung: **07.05.2008**
(21) Anmeldenummer: 02026280.4
(22) Anmeldetag: 27.11.2002
(51) Int. Cl.: F16H 57/04

(54) **Automatgetriebe**
Automatic transmission
Transmission automatique

(30) Priorität: 30.11.2001 DE 10158894
(43) Veröffentlichungstag der Anmeldung: 04.06.2003
(73) Patentinhaber: ZF FRIEDRICHSHAFEN AG, 88038 Friedrichshafen (DE)
(72) Erfinder: Fritschle, Ulrich, 88069 Tettnang (DE)

(56) Entgegenhaltungen:
- EP-A- 0 703 377
- DE-A1- 4 118 929
- DE-A1- 19 934 405
- PATENT ABSTRACTS OF JAPAN Bd. 010, Nr. 010 (M-446), 16. Januar 1986 (1986-01-16) & JP 60 173305 A (HONDA GIKEN KOGYO KK), 6. September 1985 (1985-09-06)

## Beschreibung

Die Erfindung betrifft ein Automatgetriebe nach der im Oberbegriff von Anspruch 1 näher definierten Art.

Drehmomentführende Wellen mit Querbohrungen und Einstichen werden sowohl in stufenlosen Automatgetrieben als auch in Stufenautomatgetrieben zur Druckversorgung einzelner Bauteile, wie bspw. Drehmomentwandler oder Schaltelementen, im Getriebe mit einem Hydraulikfluid eingesetzt, wobei üblicherweise die Querbohrungen als zylindrische Bohrungen mit einem Übergangsradius an der Mündung ausgeführt sind.

Ein Beispiel eines derartigen Stufenautomatgetriebes ist in der DE 199 08 840 der Anmelderin beschrieben. Das Stufenautomatgetriebe weist hierbei eine Vielzahl von Kupplungen und Bremsen auf. Eine drehmomentführende Hohlwelle führt einer Kupplung dabei Kühlöl zu, welches durch die radialen Querbohrungen in der drehmomentführenden Welle austritt. Weiterhin weist die drehmomentführende Welle Einstiche für verschiedene Dichtringe auf.

Ein Beispiel eines stufenlosen Automatgetriebes mit Lamellenkupplung ist in der DE 197 34 839 A1 der Anmelderin beschrieben. Auch hierbei ist eine als drehmomentführende Welle ausgebildete Primärwelle mit Querbohrungen für die Ölführung zur Schmierung und Kühlung eines Lamellenpaktes versehen, die üblicherweise als zylindrische Querbohrungen mit einem Übergangsradius an der Mündung ausgeführt sind. Auch diese Primärwelle weist für Dichtringe Einstiche auf. Es hat sich herausgestellt, dass derartige drehmomentführende Wellen in Automatgetrieben, insbesondere für Kraftfahrzeuge, mit Querbohrungen und Einstichen aufgrund der Kerbwirkung unter bestimmten Bedingungen bruchgefährdet sind. Der Bruchbeginn tritt dabei jeweils im Mündungsbereich der Querbohrungen und Einstiche auf. Eine Festigkeitssteigerung dieser drehmomentführenden Wellen mit Querbohrungen durch einen besseren Werkstoff oder durch Optimierungen des Härteprozesses scheitert aus wirtschaftlichen Gesichtspunkten an den höheren Kosten. Es wurde auch bereits versucht, die Lage, die Anzahl und den Durchmesser der Querbohrungen zu variieren, sowie die Kerbwirkung durch eine Verbesserung der Oberflächengüte zu vermindern. Die Funktion des für den optimalen Betrieb des Automatgetriebes erforderlichen Öldurchsatzes wird hierbei oft in unzulässiger Weise eingeschränkt. Um die erforderlichen Festigkeiten zu erreichen, müssen die drehmomentführenden Wellen im Bereich der Querbohrungen und Einstiche verstärkt werden. Die drehmomentführenden wellen sollten aus schwingungstechnischen Gründen geringe Torsionssteifigkeiten aufweisen. Durch die Verstärkungen in Bereich von Querbohrungen und Einstichen würde die Torsionssteifigkeit jedoch deutlich erhöht. Zusätzlich wird der Gesamtdurchmesser und damit auch die Bauteilgesamtgröße negativ beeinflusst. Die aus dem Stand der Technik bekannten drehmomentführenden Wellen bestehen zudem aus vielen Bauteilen, die aufwendige Abdichtungen erfordern. Die Hauptbestandteile dieser drehmomentführenden Wellen sind Turbinenwelle, Leitradhohlwelle sowie Flansche

Aus der gattungemässen EP 0 703 377 A1 ist ein Automatgetriebe mit einem Gehäuse bekannt, in welchem eine Vielzahl von Kupplungen und Bremsen angeordnet sind, mit einer Eingangs- und einer Ausgangswelle sowie mit mindestens einer drehmomentführenden Welle, wobei die drehmomentführende Welle weder eine Längsbohrung zur zentralen Ölzufuhr zu Kupplungen oder Bremsen noch Querbohrungen oder Einstiche aufweist. Die zentrale Ölzufuhr zu Kupplungen und Bremsen erfolgt über eine Leitradwelle und einen Einsatz, welche die erforderlichen Ölkanäle bilden.

Die aus dem Stand der Technik bekannte Lösung weist eine Vielzahl von Bauteilen auf, die aufwendig gegeneinander abgedichtet werden müssen und hohe Anforderungen an die Fertigungsgenauigkeit stellen.

Die DE 199 34 405 zeigt eine Hohlwelle, in deren Innerem eine weitere gegenüber der Hohlwelle rotierende Welle geführt wird. Um in einem Überlappungsbereich die Führung von Medien im Innenraum der Hohlwelle zu ermöglichen, ist im Überlappungsbereich ein Formkörper in Form eines Rohrabschnitts in den Innenraum der Hohlwelle eingebracht. Diese Variante aus dem Stand der Technik bewirkt eine Einschränkung der Öldurchsatzmenge, so dass es bei Bauteilen, wie beispielsweise Automatgetriebe, zu örtlichen Überhitzungen und damit zu Bauteilausfällen führen kann.

Aufgabe der vorliegenden Erfindung ist es, eine verbesserte Ölführung in einem Automatgetriebe bei gleichzeitiger Verbesserung der mechanischen Eigenschaften des Automatgetriebes darzustellen.

Die der Erfindung zugrundeliegende Aufgabe wird durch ein, auch die kennzeichnenden Merkmale des Hauptanspruchs aufweisendes, gattungsgemäßes Automatgetriebe gelöst.

Die Lösung der vorliegenden Aufgabe wird dadurch erreicht, daß für die zentrale Ölzufuhr zum Wandler und zu den Schaltelementen eine umgeformte, keine Längsbohrung zur Ölzufuhr aufweisende Turbinenwelle sowie eine Leitradwelle verwendet wird, die einen Flansch aufweist, der über Verbindungselemente oder vorzugsweise ebenfalls durch umformen mit der Leitradwelle verbunden ist. Besonders vorteilhaft sind durch schmieden oder walzen hergestellte Bauteile aus Stahl, da diese ein gutes Dauerfestigkeitsverhalten zeigen. Durch die Verwendung einer bspw. geschmiedeten Leitradwelle mit angeschmiedetem Flansch kann die Teilezahl und die Baulänge deutlich reduziert werden, da die nach dem Stand der Technik benötigten Bauteile Leitradhohlwelle, Ölzufuhrflansch und Rechteckringbuchse entfallen können. In die Leitradwelle wird ein Einsatz in Form eines umgeformtes Blechrohres montiert, das sämtliche Ölkanäle enthält. Die bisher in Leitradhohlwelle und Ölzufuhrflansch verwendeten Ölkanäle mussten aufwendig gegossen werden. Das umgeformte Blechrohr dient als Steckeinsatz und enthält Stege, die für die Abdichtung zwischen den Ölkanälen sowie nach außen sorgen. Der Einsatz wird vorzugsweise aus Stahl gefertigt, um eine Ölleckage bei Zunahme der Temperatur so gering wie möglich zu halten. Bei den nach dem Stand der Technik ausgeführten Bauteilen wird häufig Aluminium verwendet, was bei den geforderten Temperaturbereichen durch die Wärmedehnung zu erhöhten Leckagen führen kann. Der Einsatz kann auch urgeformt werden, wobei die ölführenden Kanäle außenliegend ausgeführt sind, damit es zu keinen Hinterschneidungen im Gussmodell kommt. Die Turbinenwelle ist als Vollwelle ausgeführt und weist weder Querbohrungen noch Einstiche zwischen den Mitnahmeverzahnungen auf. Weiterhin sind keine Verstärkungen in Bereich von Querbohrungen und Einstichen notwendig. Dadurch reduziert sich der maximale Wellendurchmesser sowie die Torsionssteifigkeit.

Vorteilhafte und zweckmäßige Ausgestaltungen der Erfindung sind in den Unteransprüchen angegeben. Die Erfindung ist aber nicht auf die Merkmalskombinationen der Ansprüche beschränkt, vielmehr ergeben sich für den Fachmann weitere sinnvolle Kombinationsmöglichkeiten von Ansprüchen und einzelnen Anspruchsmerkmalen aus der Aufgabenstellung.

Nachfolgend wird die Erfindung anhand eines in den Figuren dargestellten Ausführungsbeispieles näher erläutert. Es zeigen:
- Fig. 1: einen Teilausschnitt einer Ausführungsform eines erfindungsgemäßen Automatgetriebes und
- Fig. 2: einen Schnitt entlang der Linie A-A des erfindungsgemäßen Automatgetriebes in Fig. 1.

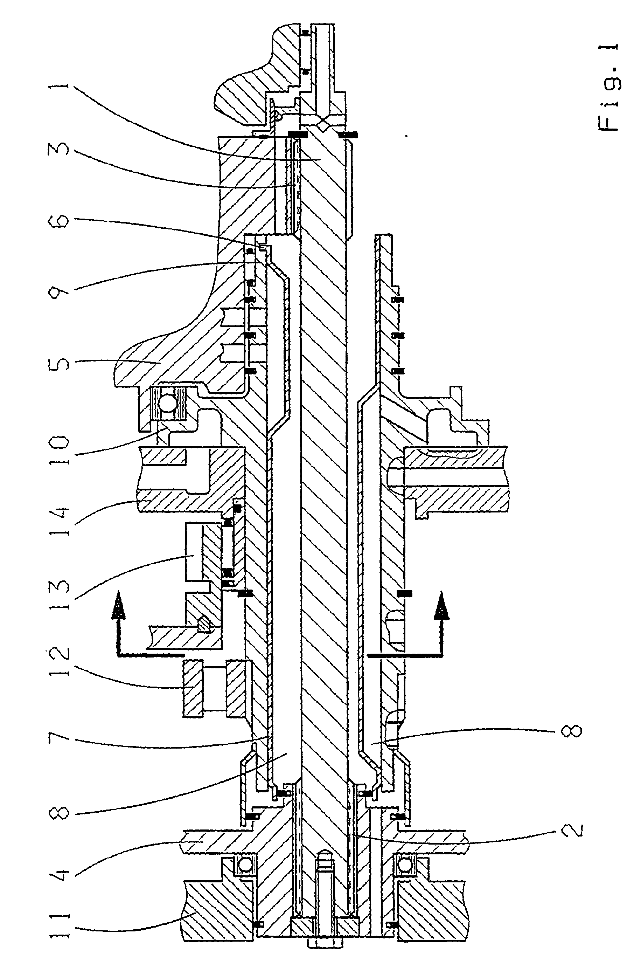

Das in Fig. 1 dargestellte Automatgetriebe weist eine drehmomentführende Welle 1, nachfolgend Turbinenwelle genannt, auf, die über Mitnahmeverzahnungen 2 und 3 mit einer Turbine 4 und einem Kupplungskörper 5 in Wirkverbindung steht. Die Turbinenwelle ist als Vollwelle ausgeführt und weist weder Querbohrungen noch Einstiche zwischen den Mitnahmeverzahnungen 2 und 3 auf. Über eine Leitradwelle 9 und einen Einsatz 6 erfolgt die zentrale Ölzufuhr zu Kupplungen und Bremsen des Automatgetriebes. Zwischen Turbine 4 und Einsatz 6 befindet sich ein nicht dargestelltes Dichtelement. Der Einsatz 6 enthält Ölkanäle 8 und Stege 7, die für die Abdichtung zwischen den sowie nach außen sorgen. Die Leitradwelle 9 weist einen Flansch 10 auf, der zur Lagerung des Kupplungskörpers 5 dient. Auf der Turbine 4 ist ein Wandlerdeckel 11 gelagert. Mit der Leitradwelle 9 sind ein Freilauf 12, ein Nebenabtrieb 13 sowie ein Steuereinsatz 14 verbunden.

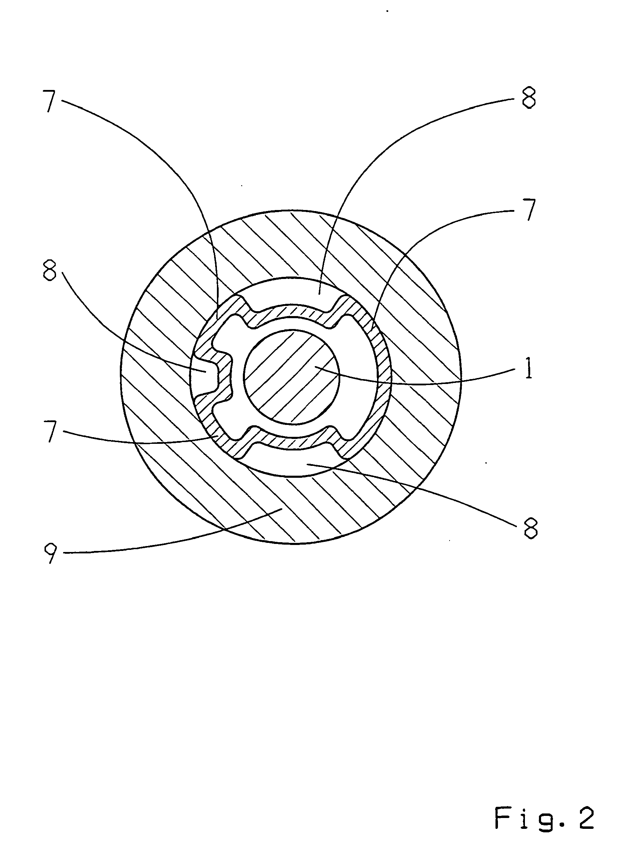

Fig. 2 zeigt einen Schnitt entlang der Linie A-A des erfindungsgemäßen Automatgetriebes aus Fig. 1. Zwischen der drehmomentführenden Welle 1 und der Leitradwelle 9 befindet sich der Einsatz 6, der durch eine spezielle Anordnung von Stegen 7 und Ölkanälen 8 für die Zufuhr von Öl zu Kupplungen und Bremsen sorgt.

### Bezugszeichen

- 1: Welle
- 2: Mitnahmeverzahnung
- 3: Mitnahmeverzahnung
- 4: Turbine
- 5: Kupplungskörper
- 6: Einsatz
- 7: Steg
- 8: Ölkanal
- 9: Leitradwelle
- 10: Flansch
- 11: Wandlerdeckel
- 12: Freilauf
- 13: Nebenabtrieb
- 14: Steuereinsatz

## Patentansprüche

1. Automatgetriebe für Kraftfahrzeuge, mit einem Gehäuse, in dem eine Vielzahl von Kupplungen und Bremsen angeordnet sind, mit einer Eingangswelle und einer Ausgangswelle sowie mit mindestens einer, als Vollwelle ausgeführten, drehmomentführenden Welle (1), die an beiden Wellenenden Mitnahmeverzahnungen (2, 3) aufweist, wobei zwischen den Mitnahmeverzahnungen (2, 3) weder Bohrungen noch Einstiche vorhanden sind, **dadurch gekennzeichnet dass** die zentrale Ölzufuhr zu Kupplungen und Bremsen durch eine Leitradwelle (9) und einen Einsatz (6) erfolgt, die sämtliche erforderliche Ölkanäle (8) bilden.

2. Automatgetriebe für Kraftfahrzeuge nach Anspruch 1, **dadurch gekennzeichnet, dass** der Einsatz (6) Stege (7) aufweist, die in Verbindung mit der Leitradwelle (9) für die Abdichtung der Ölkanäle (8) sowie nach außen sorgen.

3. Automatgetriebe für Kraftfahrzeuge nach Anspruch 1, **dadurch gekennzeichnet, dass** die Leitradwelle (9) einen Flansch (10) aufweist, der über Verbindungselemente oder durch Umformen mit der Leitradwelle (9) verbunden ist.

4. Automatgetriebe für Kraftfahrzeuge nach Anspruch 3, **dadurch gekennzeichnet, dass** die Leitradwelle (9) und der Flansch (10) durch Umformen hergestellt sind.

5. Automatgetriebe für Kraftfahrzeuge nach Anspruch 1, **dadurch gekennzeichnet, dass** der Einsatz (6) aus einem umgeformten Blechrohr besteht.

## Claims

1. Automatic gear for motor vehicles, having a housing in which a plurality of couplings and brakes are arranged, having an input shaft and an output shaft and having at least one torque transmission shaft (1) which is constructed as a solid shaft and which has, at both shaft ends, carrier tooth arrangements (2, 3), neither holes nor recesses being provided between the carrier tooth arrangements (2, 3), **characterised in that** the central oil supply to couplings and brakes is carried out by a guide wheel shaft (9) and an insert (6) which form all the required oil channels (8).

2. Automatic gear for motor vehicles according to claim 1, **characterised in that** the insert (6) has webs (7) which, together with the guide wheel shaft (9), provide sealing of the oil channels (8) and relative to the outer side.

3. Automatic gear for motor vehicles according to claim 1, **characterised in that** the guide wheel shaft (9) has a flange (10) which is connected to the guide wheel shaft (9) by means of connection elements or by means of shaping.

4. Automatic gear for motor vehicles according to claim 3, **characterised in that** the guide wheel shaft (9) and the flange (10) are produced by means of shaping.

5. Automatic gear for motor vehicles according to claim 1, **characterised in that** the insert (6) comprises a shaped sheet metal pipe.

## Revendications

1. Boîte de vitesses automatique pour véhicules automobiles, comprenant un carter dans lequel sont disposés une pluralité d'embrayages et de freins, comprenant un arbre d'entrée et un arbre de sortie ainsi qu'au moins un arbre (1) transmettant le couple, constitué par un arbre plein, qui comporte à ses deux extrémités des dentures d'entraînement (2, 3), aucun perçage ni évidement n'étant prévu entre les dentures d'entraînement (2, 3), **caractérisée en ce que** l'amenée d'huile centrale aux embrayages et aux freins s'effectue à travers un arbre de stator (9) et une insertion (6), lesquels forment tous les canaux d'huile nécessaires (8).

2. Boîte de vitesses automatique pour véhicules automobiles selon la revendication 1, **caractérisée en ce que** l'insertion (6) comporte des nervures (7) qui assurent, en combinaison avec l'arbre de stator (9), l'isolation étanche des canaux d'huile (8) ainsi que l'étanchéité par rapport à l'extérieur.

3. Boîte de vitesses automatique pour véhicules automobiles selon la revendication 1, **caractérisée en ce que** l'arbre de stator (9) comporte une collerette (10) qui est reliée à l'arbre de stator (9) par l'intermédiaire d'éléments d'assemblage ou par formage.

4. Boîte de vitesses automatique pour véhicules automobiles selon la revendication 3, **caractérisée en ce que** l'arbre de stator (9) et la collerette (10) sont réalisés par formage.

5. Boîte de vitesses automatique pour véhicules automobiles selon la revendication 1, **caractérisée en ce que** l'insertion (6) est constituée par un tube en tôle mis en forme.
